# EUROPEAN PATENT SPECIFICATION

(11) **EP 4 431 765 B1**
(45) Date of publication and mention of the grant of the patent: **29.10.2025**
(21) Application number: 23305353.7
(22) Date of filing: 15.03.2023
(51) Int. Cl.: F16H 61/00, B60K 17/348

(54) **WORK VEHICLE**
ARBEITSFAHRZEUG
VÉHICULE DE TRAVAIL

(43) Date of publication of application: 18.09.2024
(73) Proprietor: KUBOTA CORPORATION, Osaka-shi, Osaka 556-8601 (JP)
(72) Inventor: LOIR, Hugues, 60800 Crépy-en-Valois (FR)
(74) Representative: Cabinet Beau de Loménie

(56) References cited:
- WO-A1-2021/247695
- DE-A1- 102016 116 538
- DE-A1- 102017 220 667

## Description

### Technical field

The present invention relates to a braking device, especially to a transmission system, for an agricultural vehicle such as a tractor, and also to a control method for a transmission of an agricultural vehicle.

### State of the art

Agricultural vehicles such as tractors usually operate in various driving modes, depending on their situation and work operation. Such multiple driving modes lead to a complex and voluminous structure.

Document DE102017220667A1, which shows a work vehicle and on which the two-part form is based, and
documents DE102016116538A1 and WO2021/247695A1 present examples of known structures. The present invention aims at optimizing such systems by implementing additional functions.

### Presentation of the invention

The present invention aims at providing a solution to these technical issues.

The present invention relates to a transmission system for an agricultural vehicle as defined in claim 1.

According to the present invention, the controller is configured to selectively:
- engage only the first clutch, so as to couple the second axle to the prime mover to drive the second axle at a first rotational speed which is proportional with the first axle speed by a first ratio,
- engage only the second clutch, so as to couple the second axle to the prime mover to drive the second axle at a second rotational speed which is proportional with the first axle speed by a second ratio distinct from the first ratio,
- engage neither the first clutch nor the second clutch, so that only the first axle is driven by the prime mover,
- engage both the first clutch and the second clutch, so that the second axle is coupled to the prime mover through the two distinct reduction ratios, the first ratio and the second ratio, so as to immobilize the first axle and the second axle.

Preferred embodiments of the present invention are laid down in the dependent claims. The second clutch can be configured such that when only the second clutch is engaged the rotational speed of the second axle is higher than the rotational speed of the first axle, for instance equal to twice the rotational speed of the first axle.

The transmission can optionally comprise a primary shaft wherein the primary shaft is coupled to the prime mover.

The first axle can be provided with a first differential. The second axle can be provided with a second differential.

In an embodiment, the first axle can be coupled to the primary shaft through the first differential.

The invention also relates to a control method for a transmission of an agricultural vehicle as defined in claim 6.

One of the four wheels drive mode could be used as a turning drive mode, the rotational speed of the second axle can for instance be twice that of the first axle.

### Presentation of the drawings

The invention and its advantages will be better understood upon reading the detailed description made here after of different embodiments of the invention, given by way of non-limiting examples. This description makes reference to the pages of appended drawings, in which:
[Fig. 1] Figure 1 presents a schematic drawing of an embodiment of the invention.
[Fig. 2] Figure 2 presents a schematic drawing of another embodiment of the invention.

In all the figures, similar elements are designated by identical numerical references.

### Detailed description

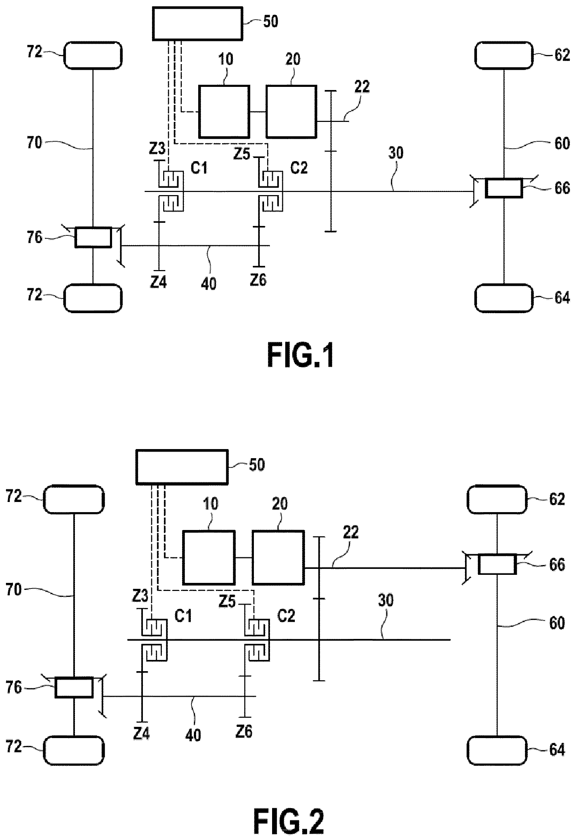

A first example embodiment of the invention will then be described with reference to figure 1.

In the present text, by "coupled to", it is meant that two elements are coupled to each other, possibly through other intermediate elements. By contrast, "directly coupled to" is to be understood as indicating that there are no intermediate elements between two elements that are directly coupled to each other.

This figure is a schematic view of a transmission system for a work vehicle such as an agricultural vehicle, for instance a tractor or a harvester combine.

The transmission comprises a prime mover 10 coupled with a gearbox 20. The prime mover 10 can for instance be a thermal engine, an electric engine or a hydraulic engine.

The gearbox 20 is configured to provide an output through an output shaft 22 provided with gearings so as to provide the desired output.

A primary shaft 30 is coupled to the output shaft 22 through gearings. This primary shaft 30 is coupled to a first axle 60 which is here represented as comprising two wheels 62 and 64 and an optional first differential 66 which couples the primary shaft 30 to the first axle 60. This first axle 60 is for instance the rear axle of a tractor, and is the driving axle of the vehicle.

A secondary shaft 40 is selectively coupled to the primary shaft 30 through a first clutch C1 and a second clutch C2. In other words, the secondary shaft 40 is selectively coupled to the prime mover 10 through the first clutch C1 and the second clutch C2.

This secondary shaft 40 is coupled through an optional second differential 76 to a second axle 70, which is here depicted with two wheels 72 and 74. This second axle 70 is for instance the front axle of a tractor. In other words, the second axle 70 is selectively coupled to the prime mover 10 through the first clutch C1 and the second clutch C2.

A controller 50 is provided, which typically controls the prime mover 10, the first clutch C1 and the second clutch C2. The controller 50 may comprise a plurality of Electronic Control Units, commonly referred to as "ECUs". The prime mover 10, the first clutch C1 and the second clutch C2 can for instance be controlled by different ECUs from the controller 50, or by different controllers.

The first clutch C1 and the second clutch C2 are piloted so as to selectively couple the secondary shaft 40 to the primary shaft 30.

When the first clutch C1 and the second clutch C2 are disengaged, the primary shaft 30 and the secondary shaft 40 are independent from each other, such that only the primary shaft 30 is driven by the prime mover 10, and therefore only the first axle 60 is driven by the prime mover 10.

The first clutch C1 and the second clutch C2 have different reduction ratios, so as to enable different driving modes of the secondary shaft 40.

For instance, if we consider that:
- the output of the first clutch C1 is through a gear wheel with a number of teeth equal to Z3, which cooperates with a gear wheel of the secondary shaft 40 that presents a number of teeth equal to Z4, and
- the output of the second clutch C2 is through a gear wheel with a number of teeth equal to Z5, which cooperates with a gear wheel of the secondary shaft 40 that presents a number of teeth equal to Z6,
the ratios Z3/Z4 and Z5/Z6 are different from each other.

The first clutch C1 can for instance be configured so that when it is engaged while the second clutch C2 is disengaged, the secondary shaft 40 is coupled to the primary shaft 30 so that the secondary shaft 40 and the primary shaft 30 present a proportional speed defined by among others the ratio Z3/Z4. Such a configuration can for instance be used when additional traction is required, so switch the vehicle to a 4 wheels drive mode.

The second clutch C2 can for instance be configured so that when it is engaged while the first clutch C1 is disengaged, the secondary shaft 40 is coupled to the primary shaft 30 so that the second axle 40 presents a rotational speed that is proportional with the primary shaft 30, wherein the ratio is partially defined by Z5/Z6. For instance, the second axle 40 can then present a rotational speed that is higher than the rotational speed of the primary shaft 30, or for instance twice the rotational speed of the primary shaft 30. Such a configuration can for instance be used when a vehicle such as a tractor is required to make a steep turn. Indeed, during some work operations for a tractor or the like, the rotation is usually centered on one of the rear wheels, which therefore travels along a shorter path than the front wheels.

In the claimed invention, the controller 50 is configured so as to selectively control the first clutch C1 and the second clutch C2 to be simultaneously engaged. Such a simultaneous engagement of both the first clutch C1 and the second clutch C2 will apply two different reduction ratios between the primary shaft 30 and the secondary shaft 40, and will therefore stop or prevent the rotation of the primary shaft 30 and of the secondary shaft 40, which results in an immobilization of the first axle 60 and of the second axle 70, which therefore enables to achieve a brake effect, for instance a parking brake effect.

In other words, the controller 50 is configured to engage the first clutch C1 and the second clutch C2 so as to obtain a brake effect, for instance a parking brake effect.

The first clutch C1 and the second clutch C2 are typically configured to resist to a defined torque, so as not to slide.

The engagement of both the first clutch C1 and the second clutch C2 can be made either simultaneously or progressively.

For instance, if we consider an initial situation where the vehicle is not moving, then both the first clutch C1 and the second clutch C2 can be simultaneously engaged so as to prevent a displacement of the vehicle.

In addition, if the vehicle is moving, then both the first clutch C1 and the second clutch C2 can be simultaneously gradually engaged so as to apply a gradually increasing braking effect.

Furthermore, if we consider for instance a working configuration where a single clutch is engaged, then the other clutch can be gradually engaged to apply a gradually increasing braking effect.

For instance, if we consider that the vehicle is in a working configuration where only the first clutch C1 is engaged so as to obtain a four wheels drive configuration, then the second clutch C2 can be gradually engaged so as to apply a gradually increasing brake effect, for instance until the second clutch C2 and the first clutch C1 are fully engaged so as to obtain a parking brake effect. In this case, the gradual engagement of the second clutch C2 will enable to obtain a potential service or emergency braking.

In a similar way, if we consider that the vehicle is in a configuration where only the second clutch C2 is engaged, for instance for a steep turning, then the first clutch C1 can be gradually engaged so as to apply a gradually increasing brake effect, for instance until the second clutch C2 and the first clutch C1 are fully engaged so as to obtain a parking brake effect. In this case, the gradual engagement of the first clutch C1 will enable to obtain a potential service or emergency braking.

Figure 2 presents a second embodiment of the invention.

This embodiment is similar to the one already described with reference to figure 1. Only the differences will be described here.

In this embodiment, the first differential 66 of the first axle 60 (or the first axle 60 when provided without differential) is coupled to the output shaft 22 rather than to the primary shaft 30. The first axle 60 is therefore directly driven by the output shaft 22 of the gearbox 20.

The other functions remain unchanged. The first clutch C1 and second clutch C2 can selectively couple the primary shaft 30 to the secondary shaft 40. When both are engaged, the primary shaft 30 and the secondary shaft 40 are immobilized; relative rotation of the primary shaft 30 and the secondary shaft 40 is prevented. As the primary shaft 30 is prevented from rotating, the output shaft 22 of the gearbox 20 is also prevented from rotating since the primary shaft 30 and the output shaft 22 are coupled together through gearings. The configurations and functions described with reference to figure 1 therefore also apply to this embodiment.

The present invention also relates to a control method for such a transmission.

The control method can for instance comprise the operating modes described hereafter.

In a two wheels drive mode, both the first clutch and the second clutch are disengaged, such that only the first axle is driven by the prime mover 10.

In a first four wheels drive mode, only the first clutch C1 is engaged, so as to couple the second axle 70 to the prime mover 10 to drive the second axle 70 at a first rotational speed which is proportional with the first axle speed 60.

In a second four wheels drive mode, only the second clutch C2 is engaged, so as to couple the second axle 70 to the prime mover 10 to drive the second axle 70 at a second rotational speed which is proportional with the first axle 60 but the ratio between axle speed is different than the previous case. For instance, the rotational speed of the second axle could be twice the first axle 60. As a consequence, the rotational speed of the second axle 70 is twice the rotational speed of the first axle 60. This second four wheels drive mode can typically be used for steep turning, for instance for a tractor.

In a parking brake mode, emergency brake mode or service brake mode, both the first clutch and the second clutch are engaged so that the second axle is coupled to the prime mover 10 through two distinct reduction ratios, which prevents relative rotation of the first and second axle, and therefore provides a brake effect such as a parking brake effect. This will be referred to as a braking mode. In some exemplary applications, the braking mode can be used as a parking brake mode.

The different operating modes are summarized in the table hereafter.

| | First clutch C1 disengaged | First clutch C1 engaged |
|---|---|---|
| Second clutch C2 disengaged | Two wheels drive mode | First four wheels drive mode, with first ratio |
| Second clutch C2 engaged | Second four wheels drive mode, with second ratio | Braking mode |

These different operating modes can be initiated by an operator or by a controller, for instance depending on controls or commands activated by the operator or depending on the working conditions of the vehicle.

Such a system and associated method enables to optimize the use and functions of the system, thereby enabling to optimize the weight and volume of the transmission, or enabling to improve the reliability of the parking brake of the vehicle.

Although the present invention has been described with reference to specific exemplary embodiments, it is obvious that modifications and changes can be carried out on these examples with departing from the general scope of the invention as defined by the claims. In particular, individual features of the different embodiments illustrated/mentioned can be combined into additional embodiments. Consequently, the description and the drawings must be considered in an illustrative, rather than a restrictive sense.

## Claims

1. A transmission system for an agricultural vehicle, comprising:
- a prime mover (10),
- a first axle (60),
- a second axle (70),
wherein
the first axle (60) is a driving axle coupled to the prime mover (10),
the second axle (70) is selectively coupled to the prime mover (10) through a first clutch (C1) and a second clutch (C2),
a secondary shaft (40) is selectively coupled to the prime mover (10) through the first clutch (C1) and the second clutch (C2), and is coupled to the second axle (70),
the output of the first clutch (C1) is through a gear wheel with a number of teeth equal to Z3, which cooperates with a gear wheel of the secondary shaft (40) that presents a number of teeth equal to Z4,
the output of the second clutch (C2) is through a gear wheel with a number of teeth equal to Z5, which cooperates with a gear wheel of the secondary shaft (40) that presents a number of teeth equal to Z6,
wherein the ratios Z3/Z4 and Z5/Z6 are different from each other,
the system is **characterized in that** it comprises a controller (50) configured to selectively:
- engage only the first clutch (C1), so as to couple the second axle (70) to the prime mover (10) to drive the second axle (70) at a first rotational speed which is proportional to the speed of the first axle (60) by a first ratio,
- engage only the second clutch (C2), so as to couple the second axle (70) to the prime mover (10) to drive the second axle (70) at a second rotational speed which is proportional to the speed of the first axle (60) by a second ratio distinct from the first ratio,
- engage neither the first clutch (C1) nor the second clutch, so that only the first axle (60) is driven by the prime mover (10),
- engage both the first clutch (C1) and the second clutch (C2), so that the second axle (70) is coupled to the prime mover (10) through the two distinct reduction ratios, the first ratio and the second ratio, so as to immobilize the first axle (60) and the second axle (70).

2. The transmission system as defined in claim 1, wherein the second clutch (C2) is configured such that when only the second clutch (C2) is engaged, the rotational speed of the second axle (70) is higher than the rotational speed of the first axle (60).

3. The transmission system of any one of claims 1 or 2, which comprises
a primary shaft (30),
wherein
the primary shaft (30) is coupled to the prime mover (10).

4. The transmission system of claim 3, wherein the first axle (60) is coupled to the primary shaft (30).

5. A vehicle comprising the transmission system of any one of the preceding claims, wherein the first axle (60) is the rear axle of the vehicle and the second axle (70) is the front axle of the vehicle.

6. A control method for a transmission of an agricultural vehicle, said vehicle comprising a prime mover (10), a first axle (60), a second axle (70),
wherein
the first axle (60) is a driving axle coupled to the prime mover (10),
the second axle (70) is selectively coupled to the prime mover (10) through a first clutch (C1) and a second clutch (C2),
a secondary shaft (40) is selectively coupled to the prime mover (10) through a first clutch (C1) and a second clutch (C2), and is coupled to the secondary axle (70),
the output of the first clutch (C1) is through a gear wheel with a number of teeth equal to Z3, which cooperates with a gear wheel of the secondary shaft (40) that presents a number of teeth equal to Z4,
the output of the second clutch (C2) is through a gear wheel with a number of teeth equal to Z5, which cooperates with a gear wheel of the secondary shaft (40) that presents a number of teeth equal to Z6,
wherein the ratios Z3/Z4 and Z5/Z6 are different from each other,
the method being **characterized in** comprising steps of selectively initiating
- a two wheels drive mode, wherein both the first clutch (C1) and the second clutch (C2) are disengaged, such that only the first axle (60) is driven by the prime mover;
- a first four wheels drive mode, wherein only the first clutch (C1) is engaged, so as to couple the second axle (70) to the prime mover (10) to drive the second axle (70) at a first rotational speed which is proportional to the speed of the first axle (60) by a first ratio,
- a second four wheel drive mode, wherein only the second clutch (C2) is engaged, so as to couple the second axle (70) to the prime mover (10) to drive the second axle (70) at a second rotational speed which is proportional to the speed of the first axle (60) by a second ratio distinct from the first ratio,
- a braking mode, wherein both the first clutch (C1) and the second clutch (C2) are engaged so that the second axle (70) is coupled to the prime mover (10) through the two distinct reduction ratios, the first ratio and the second ratio, so as to immobilize the first axle (60) and second axle (70).

7. The method of claim 6, wherein in second four wheel drive mode, the rotational speed of the second axle (70) is higher than the rotational speed of the first axle (60).

## Patentansprüche

1. Getriebesystem für ein landwirtschaftliches Fahrzeug, umfassend:
- eine Antriebsmaschine (10),
- eine erste Achse (60),
- eine zweite Achse (70),
wobei
die erste Achse (60) eine Fahrachse ist, die mit der Antriebsmaschine (10) gekoppelt ist,
die zweite Achse (70) über eine erste Kupplung (C1) und eine zweite Kupplung (C2) selektiv mit der Antriebsmaschine (10) gekoppelt ist,
eine Sekundärwelle (40) über die erste Kupplung (C1) und die zweite Kupplung (C2) selektiv mit der Antriebsmaschine (10) gekoppelt ist und mit der zweiten Achse (70) gekoppelt ist,
der Ausgang der ersten Kupplung (C1) über ein Zahnrad mit einer Zähnezahl gleich wie Z3 erfolgt, das mit einem Zahnrad der Sekundärwelle (40) zusammenwirkt, das eine Zähnezahl gleich wie Z4 aufweist,
der Ausgang der zweiten Kupplung (C2) über ein Zahnrad mit einer Zähnezahl gleich wie Z5 erfolgt, das mit einem Zahnrad der Sekundärwelle (40) zusammenwirkt, das eine Zähnezahl gleich wie Z6 aufweist,
wobei die Verhältnisse Z3/Z4 und Z5/Z6 voneinander verschieden sind,
das System **dadurch gekennzeichnet ist, dass** es eine Steuerung (50) umfasst,
die konfiguriert ist, um selektiv:
- nur die erste Kupplung (C1) einzurücken, um die zweite Achse (70) mit der Antriebsmaschine (10) zu koppeln und die zweite Achse (70) mit einer ersten Drehzahl anzutreiben, die in einem ersten Verhältnis proportional zu der Drehzahl der ersten Achse (60) ist,
- nur die zweite Kupplung (C2) einzurücken, um die zweite Achse (70) mit der Antriebsmaschine (10) zu koppeln und die zweite Achse (70) mit einer zweiten Drehzahl anzutreiben, die in einem zweiten, von dem ersten Verhältnis verschiedenen Verhältnis proportional zu der Drehzahl der ersten Achse (60) ist,
- weder die erste Kupplung (C1) noch die zweite Kupplung einzurücken, sodass nur die erste Achse (60) von der Antriebsmaschine (10) angetrieben wird,
- sowohl die erste Kupplung (C1) als auch die zweite Kupplung (C2) einzurücken, sodass die zweite Achse (70) über die zwei verschiedenen Untersetzungsverhältnisse, das erste und das zweite, mit der Antriebsmaschine (10) gekoppelt ist, um die erste Achse (60) und die zweite Achse (70) zu sperren.

2. Getriebesystem nach Anspruch 1, wobei die zweite Kupplung (C2) konfiguriert ist, sodass, wenn nur die zweite Kupplung (C2) eingerückt ist, die Drehzahl der zweiten Achse (70) höher ist als die Drehzahl der ersten Achse (60).

3. Getriebesystem nach einem der Ansprüche 1 oder 2, das eine Primärwelle (30) umfasst,
wobei
die Primärwelle (30) ist mit der Antriebsmaschine (10) gekoppelt.

4. Getriebesystem nach Anspruch 3, wobei die erste Achse (60) mit der Primärwelle (30) gekoppelt ist.

5. Fahrzeug, umfassend das Getriebesystem nach einem der vorherigen Ansprüche, wobei die erste Achse (60) die Hinterachse des Fahrzeugs ist und die zweite Achse (70) die Vorderachse des Fahrzeugs ist.

6. Steuerungsverfahren für ein Getriebe eines landwirtschaftlichen Fahrzeugs, das Fahrzeug umfassend eine Antriebsmaschine (10), eine erste Achse (60) und eine zweite Achse (70),
wobei
die erste Achse (60) eine Fahrachse ist, die mit der Antriebsmaschine (10) gekoppelt ist,
die zweite Achse (70) über eine erste Kupplung (C1) und eine zweite Kupplung (C2) selektiv mit der Antriebsmaschine (10) gekoppelt ist,
eine Sekundärwelle (40) über eine erste Kupplung (C1) und eine zweite Kupplung (C2) selektiv mit der Antriebsmaschine (10) gekoppelt ist und mit der Sekundärachse (70) gekoppelt ist,
der Ausgang der ersten Kupplung (C1) über ein Zahnrad mit einer Zähnezahl gleich wie Z3 erfolgt, das mit einem Zahnrad der Sekundärwelle (40) zusammenwirkt, das eine Zähnezahl gleich wie Z4 aufweist,
der Ausgang der zweiten Kupplung (C2) über ein Zahnrad mit einer Zähnezahl gleich wie Z5 erfolgt, das mit einem Zahnrad der Sekundärwelle (40) zusammenwirkt, das eine Zähnezahl gleich wie Z6 aufweist,
wobei die Verhältnisse Z3/Z4 und Z5/Z6 voneinander verschieden sind,
wobei das Verfahren **dadurch gekennzeichnet ist, dass** es Schritte eines selektiven Einleitens von Folgendem umfasst
- einem Zweiradantriebsmodus, bei dem sowohl die erste Kupplung (C1) als auch die zweite Kupplung (C2) ausgerückt sind, sodass nur die erste Achse (60) von der Antriebsmaschine angetrieben wird;
- einen ersten Vierradantriebsmodus, bei dem nur die erste Kupplung (C1) eingerückt ist, um die zweite Achse (70) mit der Antriebsmaschine (10) zu koppeln und die zweite Achse (70) mit einer ersten Drehzahl anzutreiben, die in einem ersten Verhältnis proportional zu der Drehzahl der ersten Achse (60) ist,
- einen zweiten Vierradantriebsmodus, bei dem nur die zweite Kupplung (C2) eingerückt ist, um die zweite Achse (70) mit der Antriebsmaschine (10) zu koppeln und die zweite Achse (70) mit einer zweiten Drehzahl anzutreiben, die in einem zweiten, von dem ersten Verhältnis verschiedenen Verhältnis proportional zu der Drehzahl der ersten Achse (60) ist,
- einen Bremsmodus, bei dem sowohl die erste Kupplung (C1) als auch die zweite Kupplung (C2) eingerückt sind, sodass die zweite Achse (70) über die zwei verschiedenen Untersetzungsverhältnisse, das erste und das zweite, mit der Antriebsmaschine (10) gekoppelt ist, um die erste Achse (60) und zweite Achse (70) zu sperren.

7. Verfahren nach Anspruch 6, wobei die Drehzahl der zweiten Achse (70) in dem zweiten Vierradantriebsmodus höher ist als die Drehzahl der ersten Achse (60).

## Revendications

1. Système de transmission pour un véhicule agricole, comprenant :
- un moteur principal (10),
- un premier essieu (60),
- un deuxième essieu (70),
dans lequel
le premier essieu (60) est un essieu moteur couplé au moteur principal (10),
le deuxième essieu (70) est couplé de manière sélective au moteur principal (10) par l'intermédiaire d'un premier embrayage (C1) et d'un deuxième embrayage (C2),
un arbre secondaire (40) est couplé de manière sélective au moteur principal (10) par l'intermédiaire du premier embrayage (C1) et du deuxième embrayage (C2), et est couplé au deuxième essieu (70),
la sortie du premier embrayage (C1) s'effectue par l'intermédiaire d'une roue dentée ayant un nombre de dents égal à Z3, laquelle coopère avec une roue dentée de l'arbre secondaire (40) qui présente un nombre de dents égal à Z4,
la sortie du deuxième embrayage (C2) s'effectue par l'intermédiaire d'une roue dentée ayant un nombre de dents égal à Z5, laquelle coopère avec une roue dentée de l'arbre secondaire (40) qui présente un nombre de dents égal à Z6,
dans lequel les rapports Z3/Z4 et Z5/Z6 sont différents l'un de l'autre,
le système est **caractérisé en ce qu'**il comprend un contrôleur (50) configuré pour sélectivement :
- engager uniquement le premier embrayage (C1), de manière à coupler le deuxième essieu (70) au moteur principal (10) pour entraîner le deuxième essieu (70) à une première vitesse de rotation qui est proportionnelle à la vitesse du premier essieu (60) par un premier rapport,
- engager uniquement le deuxième embrayage (C2), de manière à coupler le deuxième essieu (70) au moteur principal (10) pour entraîner le deuxième essieu (70) à une deuxième vitesse de rotation qui est proportionnelle à la vitesse du premier essieu (60) par un deuxième rapport distinct du premier rapport,
- n'engager ni le premier embrayage (C1) ni le deuxième embrayage, de sorte que seul le premier essieu (60) est entraîné par le moteur principal (10),
- engager à la fois le premier embrayage (C1) et le deuxième embrayage (C2), de sorte que le deuxième essieu (70) est couplé au moteur principal (10) par les deux rapports de réduction distincts, le premier rapport et le deuxième rapport, de manière à immobiliser le premier essieu (60) et le deuxième essieu (70).

2. Système de transmission tel que défini dans la revendication 1, dans lequel le deuxième embrayage (C2) est configuré de telle sorte que lorsque seul le deuxième embrayage (C2) est engagé, la vitesse de rotation du deuxième essieu (70) est supérieure à la vitesse de rotation du premier essieu (60).

3. Système de transmission selon l'une quelconque des revendications 1 ou 2, qui comprend un arbre primaire (30), dans lequel l'arbre primaire (30) est couplé au moteur principal (10).

4. Système de transmission selon la revendication 3, dans lequel le premier essieu (60) est couplé à l'arbre primaire (30).

5. Véhicule comprenant le système de transmission selon l'une quelconque des revendications précédentes, dans lequel le premier essieu (60) est l'essieu arrière du véhicule et le deuxième essieu (70) est l'essieu avant du véhicule.

6. Procédé de commande pour une transmission d'un véhicule agricole, ledit véhicule comprenant un moteur principal (10), un premier essieu (60) et un deuxième essieu (70),
dans lequel
le premier essieu (60) est un essieu moteur couplé au moteur principal (10),
le deuxième essieu (70) est couplé de manière sélective au moteur principal (10) par l'intermédiaire d'un premier embrayage (C1) et d'un deuxième embrayage (C2),
un arbre secondaire (40) est couplé de manière sélective au moteur principal (10) par l'intermédiaire d'un premier embrayage (C1) et d'un deuxième embrayage (C2), et est couplé à l'essieu secondaire (70),
la sortie du premier embrayage (C1) s'effectue par l'intermédiaire d'une roue dentée ayant un nombre de dents égal à Z3, laquelle coopère avec une roue dentée de l'arbre secondaire (40) qui présente un nombre de dents égal à Z4,
la sortie du deuxième embrayage (C2) s'effectue par l'intermédiaire d'une roue dentée ayant un nombre de dents égal à Z5, laquelle coopère avec une roue dentée de l'arbre secondaire (40) qui présente un nombre de dents égal à Z6,
dans lequel les rapports Z3/Z4 et Z5/Z6 sont différents l'un de l'autre,
le procédé est **caractérisé en ce qu'**il comprend des étapes d'initialisation sélective :
- d'un mode deux roues motrices, dans lequel à la fois le premier embrayage (C1) et le deuxième embrayage (C2) sont désengagés, de sorte que seul le premier essieu (60) est entraîné par le moteur principal ;
- d'un premier mode quatre roues motrices, dans lequel seul le premier embrayage (C1) est engagé, de manière à coupler le deuxième essieu (70) au moteur principal (10) pour entraîner le deuxième essieu (70) à une première vitesse de rotation qui est proportionnelle à la vitesse du premier essieu (60) par un premier rapport,
- d'un deuxième mode quatre roues motrices, dans lequel seul le deuxième embrayage (C2) est engagé, de manière à coupler le deuxième essieu (70) au moteur principal (10) pour entraîner le deuxième essieu (70) à une deuxième vitesse de rotation qui est proportionnelle à la vitesse du premier essieu (60) par un deuxième rapport distinct du premier rapport,
- d'un mode de freinage, dans lequel à la fois le premier embrayage (C1) et le deuxième embrayage (C2) sont engagés de sorte que le deuxième essieu (70) est couplé au moteur principal (10) par les deux rapports de réduction distincts, le premier rapport et le deuxième rapport, de manière à immobiliser le premier essieu (60) et le deuxième essieu (70).

7. Procédé selon la revendication 6, dans lequel, dans le deuxième mode quatre roues motrices, la vitesse de rotation du deuxième essieu (70) est supérieure à la vitesse de rotation du premier essieu (60).
